# EUROPEAN PATENT APPLICATION

(11) **EP 1 213 657 A2**
(43) Date of publication of application: **12.06.2002**
(21) Application number: 01000729.2
(22) Date of filing: 10.12.2001
(51) Int. Cl.: G06F 13/42

(54) **Dual interface serial bus**

(30) Priority: 11.12.2000 US 734306
(71) Applicant: Texas Instruments Incorporated, Dallas, Texas 75251 (US)
(72) Inventor: TANHA, Reza, Plano, TX 75024 (US)
(74) Representative: Holt, Michael

(57) **Abstract**

An electronic device (400) includes a dual interface serial bus that can support either the I2C or SPI serial interfaces. The device (400) defaults using the I2C serial interface for the transmission and reception of data. However, when the CE line (406) transitions from a logic high to a logic low state, the device (400) automatically reprograms the I/O to support the SPI interface standard. Both interfaces are supported without the use of an additional interface selection pin (308).

## Description

### TECHNICAL FIELD

This invention relates in general to the field of communications, and more specifically to a method and apparatus which can provide a serial bus interface that can support at least two different serial bus protocols.

### BACKGROUND

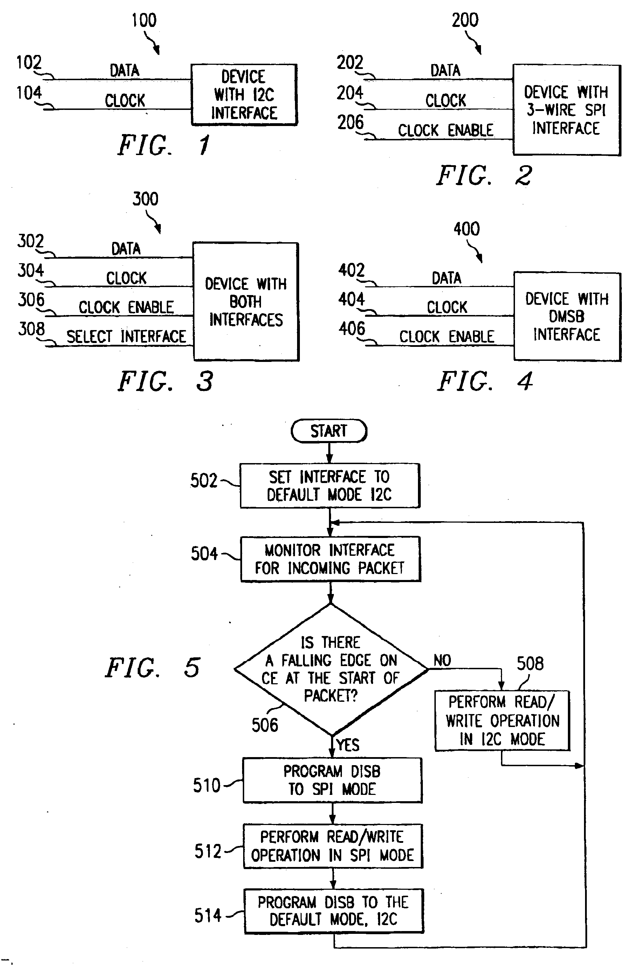

Two very popular serial buses used today are the I2C bus (also referred to as the inter-IC bus) developed by Phillips Semiconductor and the serial peripheral interface (SPI) bus developed by Motorola, Inc. The I2C bus is a worldwide de-facto solution for embedded applications. The I2C bus is a bi-directional two-wire serial bus and is used widely as a control, diagnostic and power management bus. It is a multi-master bus that can be controlled by more than one IC connected to it. In FIG. 1 there is shown a block diagram of an electronic device 100 having an I2C bus. The I2C bus uses data 102 and clock 104 lines to transfer information to/from device 100.

The SPI bus is a full-duplex, synchronous data transfer bus. Master mode transfers at 1/2, 1/4, 1/16 or 1/32 of the internal master control unit clock frequency are supported by the SPI. In slave mode, transfers are synchronized by the shift clock from the external master device and can occur at frequencies up to that of the internal clock. The SPI supports four different data transfer protocols. Each one is defined by a unique combination of the clock phase and clock polarity bits in the SPI control register. In FIG. 2, there is shown a block diagram of an electronic device 200 having an SPI bus. The SPI bus includes data 202, clock 204 and clock enable 206 lines.

Given the popularity of both the I2C and SPI buses, some electronic devices (e.g., power management ICs, etc.) have to support both buses in order to have wide market appeal. A prior art approach for supporting both the I2C and SPI buses is shown in FIG. 3. In this design an electronic device (i.e., IC) 300 includes data 302, clock 304, clock enable 306 and select interface 308 lines. The select interface line 308 causes the device 300 to operate using either the SPI or I2C buses depending on the logic level applied at line 308. Although practical, the prior art approach requires an extra select line to select between the buses adding extra expense to the design.

### BRIEF DESCRIPTION OF THE DRAWINGS

The features of the present invention, which are believed to be novel, are set forth with particularity in the appended claims. The invention, may best be understood by reference to the following description, taken in conjunction with the accompanying drawings, in the several figures of which like reference numerals identify like elements, and in which:
FIG. 1 shows a prior art diagram of a device having an I2C serial bus.
FIG. 2 shows a prior art diagram of a device having a SPI serial bus.
FIG. 3 shows a prior art solution for having an electronic device support both the I2C and SPI buses.
FIG. 4 shows a block diagram of an electronic device having the dual mode serial bus interface of the present invention.
FIG. 5 shows a flow chart highlighting the steps taken in accordance with the present invention.
FIG. 6 shows frame formats for SPI using a standard format and using the protocol of the present invention.
FIG. 7 shows the DISB SPI format in accordance with the present invention.
FIGs. 8A-8D shows the DISB interface timing architecture for the SPI format in accordance with the invention.

### DETAILED DESCRIPTION OF THE PREFERRED EMBODIMENT

While the specification concludes with claims defining the features of the invention that are regarded as novel, it is believed that the invention will be better understood from a consideration of the following description in conjunction with the drawing figures, in which like reference numerals are carried forward.

Referring now to FIG. 4, there is shown a block diagram of an electronic device such as an integrated circuit (IC) 400 using the multi-mode serial bus design of the present invention. During the following discussion, IC 400 will also be referred to as a dual-interface serial bus (DISB). IC 400 includes three I/O lines a bi-directional data line 402, a clock line 404 and a clock enable line 406 and supports both the I2C and SPI serial buses. Unlike the design of FIG. 3 that requires a selection pin 308 to select between the different protocols, the present invention does away with the costly extra pin. In the present design, the clock enable line 406 is used to distinguish the communication format of the interface and reprogram itself for the appropriate protocol.

In accordance with the preferred embodiment, when clock enable (CE) line 406 is kept at a logic high state, the clock 404 and data 402 lines behave like a standard I2C bus. Otherwise, when the CE 406 is on the falling edge, the device 400 expects the SPI protocol defined in the following section. Unlike the standard SPI, the SPI used in the present invention combines transmit and receive channels into one bi-directional port. It also incorporates a slave addressing topology to work like a bus and control many devices at the same time. The protocol includes a slave addressing identifier that allows the lines to be connected to many devices similar to that of the I2C serial bus. The speed of the SPI bus is also improved by eliminating the wait period by the master to receive acknowledgments from the slave device(s).

Following the falling edge of the CE line 406, 26 bits of information are received by device 400, the first two bits being "don't cares", followed by 8 bits defining the slave address (each device has two slave addresses, one for read and one for write operations). Following the slave address there are 8 bits for register address and the last 8 bits is data that is sent or received by device 400. The direction of the data line 402 depends on the least-significant-bit (LSB) of the slave address. It is a "1" for read and "0" for write.

After the complete frame transfer, the CE line 406 is pulled low. All data after the first data frame while CE is high is ignored. One additional benefit of the present invention is that the same slave address is used by device 400 regardless of the protocol selected (i.e., I2C or SPI). This saves on having separate slave address registers for each protocol as is done in the prior art.

The following provides further information on the two interface protocols supported by the DISB of the preferred embodiment:

### I2C Protocol

### Pin Description:

The DISB serial bus is designed to be compatible with I2C when the CE input 406 is held high. In this mode, the interface consists of the following terminals:
SCL: I2C-bus serial clock, clock pin 404
SDA: I2C-bus serial address and data, data pin 402

### Operation:

In the I2C protocol, each device is recognized by a unique address and can operate either as a receiver-only, or as a transmitter with the ability to both transmit and receive messages. Transmitters and/or receivers can operate in either master or slave modes, depending on whether the device has to initiate a data transfer or is only addressed. More detailed information on the I2C interface bus is available from Phillips Semiconductor Inc.

### 3-wire SPI Protocol

### Pin Description:

The DISB serial bus is designed to be SPI compatible when a negative transition is generated on the CE input 406. In this mode, the interface consists of the following terminals:
SCL: SPI-bus serial clock, clock pin 404
SDA: SPI-bus serial address and data, data pin 402
CE: SPI bus enable, CE pin 406

### Operation:

The CE line 406 allows the interface to operate in the SPI interface mode. When CE 406 goes low, during the first two clock cycles the state machine within device 400 disables the I2C interface and enables the SPI interface. Unlike the I2C protocol, in the SPI mode, the slave device will not send an acknowledgement bit for each data received. The data frame also includes one byte of slave address, one byte of register address, one byte of data, and half clock cycle of hold time. The total frame length is 26 bits and maximum clock cycle is 2 MHz. The following requirements must be satisfied for the interface in accordance with the preferred embodiment of the invention.
1. The operating supply (Vcc) is set between 2.7 v and 3.3v.
2. Logic "1" (high) voltage level is between 0.7Vcc and Vcc.
3. Logic "0" (low) voltage level is between 0 and 0.3Vcc.
4. CE goes low after the falling edge of the SCL.
5. CE must be low no more than 35 clock cycles.
6. Input data is sampled on the rising edge of the SCL when CE is set low.
7. Input data is latched into the device on the last rising, 27^{th} bit, of the SCL.
8. If CE goes high before completing the transmission, data is ignored and register is not updated.
9. Output data is updated on the falling edge of the SCL, when CE is set low.
10. Data and addresses are transmitted most-significant- bit (MSB) first.
11. Data field is 8 bits long.
12. Register address field is 8 bits long.
13. The first two bits in the data line (SDA) are dead-bits to allow enough time for communication mode option selection of SPI protocol.
14. The least-significant-bit (LSB) of the slave address is a R/W flag.
15. A flag of "0" indicates "WRITE" and a flag of "1" indicates "READ".
16. During the read operation, the direction of data line changes after the register address is received.

### Critical Timing

The following table 1 defines the required timing for the SPI interface.

**TABLE 1:**

| Name | Description | Min | Max | Unit |
|---|---|---|---|---|
| T_{CLK} | Clock period | 500 | | ns |
| T_{CLKL} | Clock low time | 200 | T_{CLK}-200 | ns |
| T_{CLKH} | Clock high time | 200 | T_{CLK}-200 | ns |
| Tᵣ | Clock or data rise time | | 20 | ns |
| T_{f} | Clock or data fall time | | 20 | ns |
| T_{CE} | CE low pulse width | 27 | 35 | T_{CLK} |
| T_{TD} | Inter-frame transfer delay | 5 | | T_{CLK} |
| T_{SUCE} | Clock enable setup time | 50 | T_{CLKL} | ns |
| T_{HCE} | Clock enable hold time | 0 | | ns |
| T_{SUDIN} | Input data setup time | 50 | | ns |
| T_{HDIN} | Input data hold time | 50 | | ns |
| T_{HDO} | Output data hold time | T_{CLK}-50 | T_{CLK} | ns |

Although the above information has described the implementation of the preferred embodiment of the invention, the present invention is not so limited. Those of ordinary skill in the art will appreciate that many of the above specifications can be modified depending on the particular design at hand. For example, the operating supply levels can be changed based on a different IC design, the number of register bits used, clock cycles, etc. can all be modified.

Referring now to FIG. 5, there is shown a flowchart highlighting the steps taken in accordance with the present invention. In step 502, device 400 defaults to the I2C as its default protocol on the data 402 and clock 404 lines. The interface is monitored for any incoming packets in step 504. In step 506, the device 400 monitors for a falling edge on the CE line 406. If there is no falling edge on the CE line 406, the routine moves to step 508 where the device 400 operates using the I2C interface.

If in step 506 a falling edge is detected on the CE line 406, the device 400 in step 510 is programmed to operate as an SPI interface device. In step 512, device 400 performs read and write operations using the SPI mode. Upon the CE line going to a logic high, the device 400 in step 514 reprograms itself back to its default mode of operation which is to operate using the I2C interface.

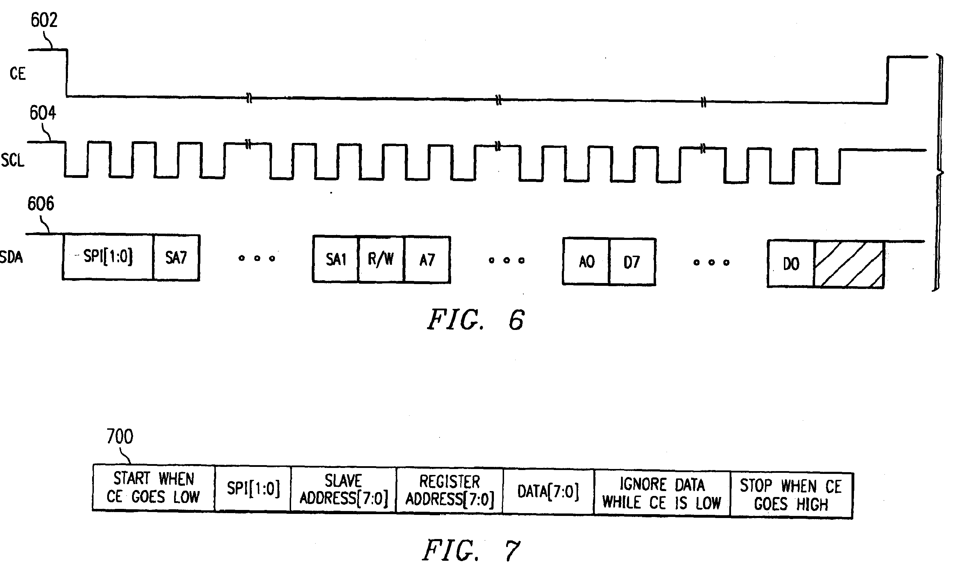

In FIG. 6 there is shown the DISB format using the SPI mode of operation. The CE 602, SCL 604 and SDA 606 lines are shown, with the SDA 606 commencing upon the CE line 602 going from high to low. In FIG. 7, there is shown the SPI format used in the DISB device of the present invention.

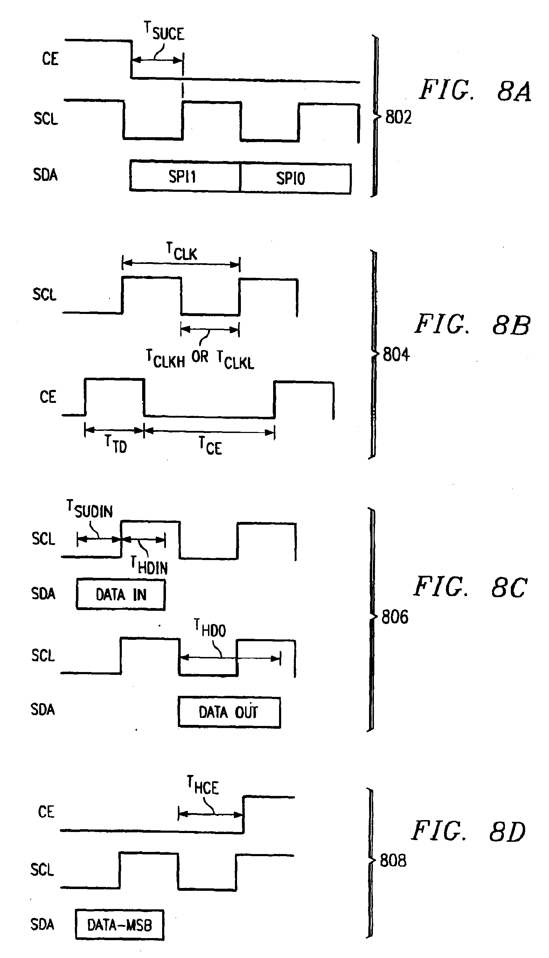

In FIGs. 8A-8D there is shown the DISB interface timing architecture for the SPI mode. Block 802 shows the clock enable setup time and the two "dead bits" SPI1 and SPI0 provided in the SPI format of the preferred embodiment. In block 804 there is shown the timing for the clock period (T_{CLK}) in the SCL line, and the inter-frame transfer delay (T_{TD}) and the CE low pulse width (T_{CE}) in the CE line. In block 806 there is shown the timing for the input data setup time (T_{SUDIN}), the input data hold-time (T_{HDIN}) and the output data hold time (T_{HDO}). Finally in block 808, there is shown the clock enable hold time (T_{HCE}).

As been described, the present invention provides for an improved method of providing for a device, which can operate using either the I2C or SPI interfaces. In the preferred embodiment, the device 400 defaults to the I2C interface, while automatically reprogramming itself to operate using the SPI interface when the CE goes low which is the interface change trigger event. The present invention allows one device 400 to operate in multiple serial interface environments.

When the device (400) is used in a system that only uses the I2C interface, the CE line 406 can be connected to the Vcc line, thereby causing the device 400 to be committed to using the I2C interface only. In environments, where the SPI interface is used, the device 400 reprograms itself to operate using the SPI interface upon the CE line 406 going from high to low. Although in the preferred embodiment, the device 400 has been designed to default to the I2C interface, in another design, the default interface could be the SPI interface.

While the preferred embodiments of the invention have been illustrated and described, it will be clear that the invention is not so limited. Numerous modifications, changes, variations, substitutions and equivalents will occur to those skilled in the art without departing from the spirit and scope of the present invention as defined by the appended claims.

## Claims

1. An electronic device capable of operating using either a first or a second interface protocol, comprising:
a clock enable input port for receiving a clock enable signal; a data port for receiving and transmitting data into and out of the electronic device; and
the electronic device in response to detecting a change in logic state in the clock enable signal causes the electronic device to automatically switch from using the first interface protocol to the second interface protocol in transmitting and receiving data over the data port.

2. An electronic device as defined in claim 1, wherein the first interface protocol comprises the I2C serial interface protocol and the second interface protocol comprises the SPI serial interface protocol.

3. An electronic device as defined in claim 2, wherein the electronic device automatically switches using the I2C serial interface protocol and starts using the SPI serial interface protocol when the electronic device detects that the clock enable signal goes from a logic high to a logic low condition.

4. An electronic device as defined in claim 3, wherein the electronic device further comprises a clock signal port for receiving a clock signal.

5. An electronic device as defined in claim 4, wherein when data using the SPI serial interface protocol is sent to the data port at least the first bit of information received is a don't care bit which gives the electronic device time to switch from using the I2C to the SPI serial interface protocol.

6. An electronic device as defined in claim 1, wherein the electronic device upon detecting that the clock enable port has switched back to its original logic state, causes the electronic device to switch back to using the first interface protocol when transmitting and receiving data over the data port.

7. An electronic device as defined in claim 1, wherein the electronic device comprises an integrated circuit (IC).

8. A method for automatically switching the interface protocol used by an electronic device to transmit and receive data over a data port, the electronic device having a clock enable port, the method comprising the steps of:
determining if the logic level in the electronic device's clock enable port has switched logic levels; and
switching the interface protocol used by the electronic device to receive data over the data port from a first to a second interface protocol if it is determined that the electronic device's clock enable port has switched logic levels.

9. A method as defined in claim 8, wherein the first interface protocol comprises the I2C serial interface protocol and the second interface protocol comprises the SPI serial interface protocol.

10. A method as defined in claim 7, wherein the determining step comprises detecting that the logic level in the clock enable port has gone from a logic high to a logic low level.

11. A method as defined in claim 9, wherein the clock enable port can stay at a logic low level for only a predetermined period of time.

12. A method as defined in claim 8, wherein the switching step also causes the electronic device to switch from the first to the second interface protocol and use the second interface protocol for all data transmitted by the electronic device over the data port.
